# EUROPEAN PATENT SPECIFICATION

(11) **EP 3 201 408 B1**
(45) Date of publication and mention of the grant of the patent: **03.07.2019**
(21) Application number: 15778755.7
(22) Date of filing: 28.09.2015
(51) Int. Cl.: E04C 1/42, C03C 17/00, C03C 27/06, C03B 11/10, C03B 23/03, C03B 23/24

(54) **A PROCEDURE FOR HOT MANUFACTURE OF BRICKS IN COLOURED GLASS**
VERFAHREN ZUR HEISSHERSTELLUNG VON ZIEGELN AUS BUNTEM GLAS
PROCÉDURE DE FABRICATION À CHAUD DE BRIQUES EN VERRE COLORÉ

(30) Priority: 30.09.2014 IT PR20140065
(43) Date of publication of application: 09.08.2017
(73) Proprietor: Bormioli Rocco S.A., 19200 Azuqueca De Henares (Guadalajara) (ES)
(72) Inventor: BASSO, Enrico, I-43123 Parma (IT)
(74) Representative: Gotra, Stefano
(86) International application number: PCT/IB2015/057426
(87) International publication number: WO 2016/051332

(56) References cited:
- US-A- 2 297 337
- US-A- 3 372 053
- US-A- 3 445 266
- US-A- 3 563 717
- US-A- 5 166 000

## Description

### Technical field

The present invention has as its subject a procedure for making a brick in glass hot-coloured on the inside of the brick without colouring the melted glass.

### Background art

A first known technique for making bricks in coloured glass requires the melted glass to be hot-coloured with special oxides (frits) while it runs in a suitable channel (feeder). The frits of various colours are mixed in the channel with melted glass by means of large spoons called "steerers".

The channel then feeds the coloured glass to a press which moulds half-shells, i.e. half-bricks.

The half-bricks are then transported towards a welding station where they are coupled two by two and welded together, forming the brick, which is also designated a glass brick.

This procedure for making a glass brick requires long times both for obtaining the required colour (at least 3-4 hours, during which the melted glass is not fed to the press but flows into a collection and recycling zone, and there is therefore no production in this period) both for the subsequent decolouration of the glass and the return to the natural base colour.

At least 8 hours of suspension of production are therefore required between the process of colouring the molten glass and the return to clear glass.

It should be noted, furthermore, that the frits used are corrosive and the refractory bricks of the channel are therefore subject to more rapid wear.

It therefore follows from the above that bricks in coloured glass cost much more than bricks in neutral glass.

US 3445266 and US 3372053 discloses a method for coating glassware by spraying the frits on the glass substrate, following by the steps of preheating, firing, annealing and cooling.

US 5166000 discloses a method of applying thin films of amphiphilic molecules to substrates, i.e. glass surface, that are at a temperature of 100°-200°C.

A second known technique requires that after the formation of the brick, and therefore in a second, cold process, paint is injected into the inside of the brick through a hole created during the welding stage. This is, however, a very artisan procedure, and also not very efficient because, as the technical characteristics of the brick are altered, it can only be used in interiors.

From WO 98/52881 **and** JP 11071853 a glass brick is known inside which a film of metallic oxide is sprayed for 0.5 seconds, which is designed to resolve a different technical problem (that of the wear on an external oxide film exposed to bad weather) and the oxide film is certainly not comparable with a coloured paint designed to colour a glass brick. The document, furthermore, does not suggest any kind of continuous application process for the oxide, i.e. taking place during the path from the press to the welding and without altering the duration of this path. The document, furthermore, does not specify the use of directional plates in the welder capable of preventing the film being burnt.

US 3563717 refers to a method for producing hollow glass bricks with a coating of enamel on the internal surfaces so as to obtain a coloured glass brick. This is a well-known process which applies the enamel half at ambient temperature and half at a higher temperature and cannot therefore take place continuously between press and welder without interrupting or altering the transporting of the valves or half-bricks between press and welder. Also in this case directional plates are not provided in the burner for the welder.

US 3778243 refers to a method for making blocks of glass coated internally with metal oxides, to which the same observations apply as have been expressed for WO 98/52881. US 2297337 discloses a method of manufacturing glass bricks in which a screen of fibrous material (previously enriched by a coloured enamel) is interposed between two half-bricks.

### Disclosure of the invention

An object of the present invention is to eliminate the above disadvantages and to make available a procedure for making a coloured glass brick, with various colours, light, dark, all with particularly brilliant light reflections especially in conditions of half-light.

A further object is to obtain these innovative colour effects while considerably reducing the costs of the process of colouring the molten glass, both those of the artisan procedure described above, keeping all the structural technical characteristics of the brick unalterated and not interfering in any way with the normal process of moulding and forming the brick, and therefore without reducing the productivity of the processing line.

Said objects are fully achieved by the process which is the subject of the present invention, which is defined in claim 1. Preferred embodiments are defined in the dependent claims.

The shells are dimensionally identical to each other, but can also carry different surface decorations.

Preferably the paint is applied by spraying through a plurality of delivery guns arranged along the path from the pressing station to the welding station.

The delivery guns are tracking guns, resistant to temperatures of up to 700°C, which track the shells along their path, spray-painting the inside in not more than 2 seconds and tracking each shell for about 10 cm.

The paint is applied to the internal surface of the shell which is designed to be directly visible when the brick is formed and laid: this is normally the inner surface of the shell having the greatest extension. The paint thus remains inside even after the two shells are welded to form the brick.

A brick in coloured glass with particular iridescent effects is also disclosed.

### Brief description of drawings

These and other characteristics will become more apparent from the following description of preferred embodiments of the procedure, illustrated, purely by way of non-limiting simplification in the attached plate of drawings in which:
- Figure 1 schematically illustrates the layout of the plant designed for implementing the procedure;
- Figures 2 and 3 illustrate two examples of bricks.

### Detailed description of preferred embodiments of the invention

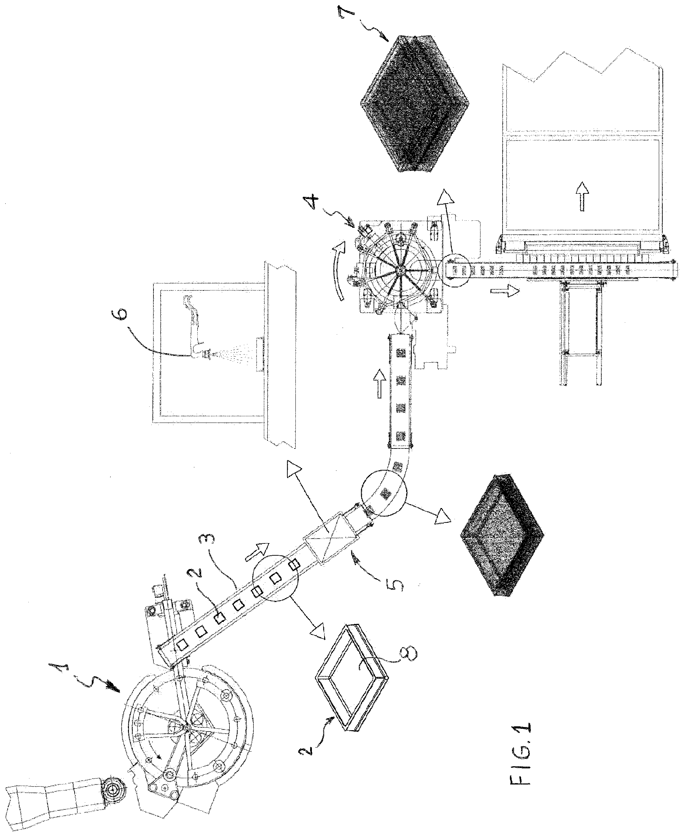

With reference to figure 1, no. 1 indicates a pressing station where shells 2 of neutral (i.e. non-coloured) glass are made. The shells 2 are preferably half-bricks designed to be coupled to form a final brick 7 (figures 2 and 3). However, according to a variant embodiment not illustrated, it is possible to provide for the shells being different from each other (as regards decoration and aesthetic characteristics, but maintaining dimensional identity), with the constraint that coupling such shells two by two, even though they are different, should result in a finished brick.

The shells 2 which come out of the pressing station 1 are transported by a heated conveyor 3 (preferably of belt type) towards a welding station 4, after which the bricks 7 are deposited in an oven, called an annealing oven, in which the bricks will be progressively cooled. During the path between the pressing station 1 and the welding station 4, which lasts preferably about 50 seconds, and in any event a time comprised between 50 and 70 seconds, the shells are at a temperature of about 580-620°C, and preferably of about 600°C, and move first into a painting station 5 where at least two delivery means 6 (preferably spray guns) spray iridescent coloured paint at least onto the internal surface 8 of greatest extension of the shell 2 (normally this is the internal surface designed to be visible when the brick is laid, unlike the lateral internal surfaces which are less visible from the outside). The term 'iridescent coloured paint' is intended to mean a paint capable of conferring a colouration with effects of reflected bright colours, which are particularly effective in conditions of half-light.

The step of painting a shell lasts not more than 2 seconds and is performed without interfering in any way with the normal process of moulding and forming the bricks, therefore without increasing the times necessary for transferring them from the pressing station 1 to the welding station 4. There is no provision for pauses or deviations to cool the coloured paints used, which must indeed withstand the high temperatures used in manufacture: the shells 2 leave the pressing station 1 at about 580°C during the path towards the welding station 4, where they actually bear the temperatures of about 900°C of the burners on the welder, according to a known procedure.

The present procedure, however, requires the original painting of the insides of the shells to be carried out hot and "continuously", i.e. in the course of being transported, without altering the time taken. To achieve this, the painting station 5 is required to be in the shape of a box closed on three sides, positioned at about 3m from the exit of the pressing station 1 and comprising inside it preferably two tracking guns (resistant to temperatures of up to 700°C), which track the shell for about 10 cm and spray-paint its inside in two seconds. The optimum number of guns is two. The shells then arrive at the welding station 4 where, in an original manner, there are directional plates, not illustrated, equipped with holes and positioned in such a way as to direct and concentrate the flames of the burner onto the edges of the shells, preventing the flames, which have to soften the edges of the shells 2, from being able to enter the inside and burn the paint. There are in fact hitherto no paints for industrial use resistant to temperatures over 750°C. The welding of the shells takes place in about 20 seconds.

Once welded together, the shells become one whole brick 7 which, in accordance with the normal production process, goes into the annealing oven, from which the bricks come out at about 40°C.

The ability to control the flames with the directional drilled plates makes it possible not only not to burn the paints, but also with some paints to create further "special effects": in particular a slightly opaque effect very similar to the colour of pearls and therefore comparable to "pearlescent effect".

Furthermore, the use of these special paints known as 'lustres', which are able to absorb all the reflections of light and to transmit them effectively in half-light situations (when normal colours tend to go dark) creates iridescent effects, as previously said. These special paints are sprayed onto the shells 2 when they are at a temperature comprised between 550° and 750°C: at lower temperatures the paints would not amalgamate well with the glass, at higher temperatures they would burn, and it is for this reason that the procedure which is the subject of the present invention requires the painting of the shells 2 to take place hot and continuously while the shells are transported by a heating conveyor 3.

The spraying stage can be regulated, according to known means, in such a way as to paint in an original manner only the inner surface of largest extension 8 (entirely or partially), or to also partially paint the edges, or the entire inner surface of the shell.

Finally, using a plurality of delivery means or delivery guns 6, each associated with a different type of colour, it is possible to provide for colouring different shells with different colours.

Performing the original colouration of the shells while they are still at high temperature (580-620°C), by operating on the internal surface of the half-brick, makes it possible to avoid the down times typical of colouring the glass using frits, and the overall procedure is faster and costs less as a result.

Various types of colours/paints can be used, preferably of liquid type, with the constraint that they must be suitable for withstanding temperatures of up to about 750°C.

The internal lateral band of the shell (four lateral surfaces) can be blank, as in the known art, or can be entirely or partially coloured like the surface of greatest extension 8.

## Claims

1. A procedure for creating a coloured glass brick (7) comprising the steps of:
forming shells (2) by pressing/moulding neutral, i.e. non-coloured, melted glass, i.e. forming brick portions destined to be coupled together two by two to create the brick (7);
welding the shells (2) two by two so as to create individual bricks (7),
**characterised in that** during a path of the shells (2) from a pressing station (1) to a welding station (4) lasting 50-70 seconds, the shells (2) are at a temperature of 500-700°C and are moved by a suitable heating conveyor (3), and coloured paint is applied in not more than 2 seconds to at least one portion of the internal surface of largest extension (8) of said shells (2) without slowing down the process of conveying the shells (2) along said path from the pressing station (1) to the welding station (4),
and **in that**, at the stage of welding the shells (2), directional plates are used which direct and concentrate the flames of the welding station (4) onto the edges of the shells, softening them and favouring their welding, at the same time preventing the paint applied to the inside of the shells being burnt.

2. The procedure according to claim 1, wherein the shells (2) are dimensionally identical with each other.

3. The procedure according to claim 1, wherein the shells (2) are of two different types, having different types of decoration.

4. The procedure according to claim 1, wherein the paint is applied by spraying through a plurality of delivery guns (6) arranged along the path from the pressing station (1) to the welding station (4).

5. The procedure according to claim 4, wherein each delivery gun (6) delivers paint of a particular colour, different delivery guns (6) being able to comprehensively deliver paints of different colours.

6. The procedure according to claim 1, wherein the paint is applied to the internal surface of the shell (2) which is destined to be directly visible when the brick (7) is formed and laid.

7. The procedure according to claim 1, wherein both shells (2) designed to form a brick (7) are internally painted.

8. The procedure according to claim 1, wherein the coloured paint is an iridescent coloured paint, called lustre.

9. The procedure according to claim 1, wherein the two internal surfaces of largest extension (8) of two shells (2) designed to be coupled to form a brick (7) are painted with different colours.

10. The procedure according to claim 1, wherein the application of paint is performed exclusively on the internal surface of largest extension.

11. The procedure according to claim 4, wherein the delivery guns (6) are tracking guns, resistant to temperatures of up to 700°C, which track the shells, spray-painting their insides in not more than 2 seconds.

12. The procedure according to claim 11, wherein the delivery guns (6) track the shells for about 10 cm and spray-paint their insides in two seconds.

## Patentansprüche

1. Verfahren zur Erzeugung eines Ziegels (7) aus buntem Glas, umfassend die Schritte:
Bilden von Schalen (2) durch Pressen/Formen von neutralem, d.h. nicht gefärbtem, geschmolzenem Glas, d.h. Bilden von Ziegelabschnitten, die dazu bestimmt sind, paarweise miteinander verbunden zu werden, um den Ziegel (7) zu erzeugen;
Schweißen der Schalen (2) paarweise, um einzelne Ziegel (7) zu erzeugen,
**dadurch gekennzeichnet, dass** die Schalen (2) während eines Wegs der Schalen (2) von einer Pressstation (1) zu einer Schweißstation (4), dauernd 50-70 Sekunden, eine Temperatur von 500-700 °C aufweisen und von einem geeigneten Heizförderer (3) bewegt werden, und ein Farblack auf mindestens einen Abschnitt der am größten ausgedehnten Innenfläche (8) der Schalen (2) nicht länger als 2 Sekunden aufgetragen wird, ohne das Verfahren zum Fördern der Schalen (2) entlang des Wegs von der Pressstation (1) zur Schweißstation (4) zu verlangsamen,
und dass beim Schritt zum Schweißen der Schalen (2) Richtungsplatten verwendet werden, die die Flammen der Schweißstation (4) auf die Ränder der Schalen richten und konzentrieren, sie erweichen, deren Schweißen begünstigen und gleichzeitig verhindern, dass der auf die Innenseite der Schalen aufgetragene Lack verbrennt.

2. Verfahren nach Anspruch 1, wobei die Schalen (2) hinsichtlich ihrer Abmessungen miteinander identisch sind.

3. Verfahren nach Anspruch 1, wobei die Schalen (2) von zwei verschiedenen Typen sind und verschiedene Typen von Dekoration aufweisen.

4. Verfahren nach Anspruch 1, wobei der Lack durch Sprühen durch eine Vielzahl an Abgabepistolen (6) aufgetragen wird, die entlang des Wegs von der Pressstation (1) zur Schweißstation (4) angeordnet sind.

5. Verfahren nach Anspruch 4, wobei jede Abgabepistole (6) Lack einer bestimmten Farbe abgibt, wobei verschiedene Abgabepistolen (6) in der Lage sind, Lacken verschiedener Farben vollständig abzugeben.

6. Verfahren nach Anspruch 1, wobei der Lack auf die innere Oberfläche der Schale (2) aufgetragen wird, die dazu bestimmt ist, direkt sichtbar zu sein, wenn der Ziegel (7) gebildet und verlegt wird.

7. Verfahren nach Anspruch 1, wobei beide Schalen (2), die zur Bildung eines Ziegels (7) bestimmt sind, innen lackiert sind.

8. Verfahren nach Anspruch 1, wobei der Farblack ein schillernder Farblack ist, der Glanz genannt wird.

9. Verfahren nach Anspruch 1, wobei die zwei am größten ausgedehnten Innenflächen (8) der zwei Schalen (2), die dazu bestimmt sind, zu einem Ziegel (7) gekoppelt zu werden, mit verschiedenen Farben lackiert werden.

10. Verfahren nach Anspruch 1, wobei der Lackauftrag ausschließlich auf der am größten ausgedehnten Innenfläche erfolgt.

11. Verfahren nach Anspruch 4, wobei die Abgabepistolen (6) Verfolgungspistolen sind, die gegen Temperaturen von bis zu 700 °C beständig sind, die Schalen verfolgen und deren Innenseiten nicht länger als 2 Sekunden sprühlackieren.

12. Verfahren nach Anspruch 11, wobei die Abgabepistolen (6) die Schalen etwa 10 cm lang verfolgen und deren Innenseiten in zwei Sekunden sprühlackieren.

## Revendications

1. Procédure pour créer une brique (7) en verre coloré comprenant les étapes de :
former des coques (2) par pressage/moulage de verre fondu neutre, c'est-à-dire non coloré, c'est-à-dire former des parties de brique destinées à être accouplées deux par deux pour créer la brique (7) ;
souder les coques (2) deux par deux de manière à créer des briques (7) individuelles,
**caractérisée en ce que** pendant un parcours des coques (2), d'un poste de pressage (1) à un poste de soudage (4), durant de 50 à 70 secondes, les coques (2) sont à une température de 500-700 °C et sont déplacées par un convoyeur à chauffage (3) approprié, et un verni coloré est appliqué pas plus de 2 secondes à au moins une partie de la surface interne, ayant l'extension (8) la plus grande, desdites coques (2) sans ralentir le processus de convoyage des coques (2) le long dudit parcours du poste de pressage (1) au poste de soudage (4),
et **en ce que**, à l'étape de soudage des coques (2), des plaques directionnelles sont utilisées qui orientent et concentrent les flammes du poste de soudage (4) sur les bords des coques, en les amollissant et en favorisant leur soudage, et en empêchant dans le même temps que le vernis appliqué à l'intérieur des coques ne brûle.

2. Procédure selon la revendication 1, dans laquelle les coques (2) ont des dimensions réciproquement identiques.

3. Procédure selon la revendication 1, dans laquelle les coques (2) sont de deux types différents, comportant différents types de décoration.

4. Procédure selon la revendication 1, dans laquelle le vernis est appliqué par pulvérisation à travers une pluralité de pistolets d'application (6) disposés le long du parcours du poste de pressage (1) au poste de soudage (4).

5. Procédure selon la revendication 4, dans laquelle chaque pistolet d'application (6) applique un vernis d'une couleur particulière, différents pistolets d'application (6) pouvant globalement appliquer des vernis de différentes couleurs.

6. Procédure selon la revendication 1, dans laquelle le vernis est appliqué à la surface interne de la coque (2) étant destinée à être directement visible lorsque la brique (7) est formée et posée.

7. Procédure selon la revendication 1, dans laquelle les deux coques (2) conçues pour former une brique (7) sont vernies à l'intérieur.

8. Procédure selon la revendication 1, dans laquelle le vernis coloré est un vernis coloré irisé, appelé lustre.

9. Procédure selon la revendication 1, dans laquelle les deux surfaces internes, dotées de l'extension (8) la plus grande, des deux coques (2) conçues pour être accouplées pour former une brique (7) sont vernies avec des couleurs différentes.

10. Procédure selon la revendication 1, dans laquelle l'application du vernis est exclusivement réalisée sur la surface interne ayant l'extension la plus grande.

11. Procédure selon la revendication 4, dans laquelle les pistolets d'application (6) sont des pistolets de suivi, résistant à des températures allant jusqu'à 700 °C, qui suivent les coques, en vernissant par pulvérisation leurs intérieurs en pas plus de 2 secondes.

12. Procédure selon la revendication 11, dans laquelle les pistolets d'application (6) suivent les coques sur environ 10 cm et vernissent par pulvérisation leurs intérieurs en deux secondes.
